# EUROPEAN PATENT APPLICATION

(11) **EP 4 631 770 A1**
(43) Date of publication of application: **15.10.2025**
(21) Application number: 24305581.1
(22) Date of filing: 10.04.2024
(51) Int. Cl.: B60L 3/12, B60L 50/64, B60L 53/10, B60L 53/62, B60L 58/12, H02J 7/00

(54) **AN ASSEMBLY, IN PARTICULAR FOR A VEHICLE, COMPRISING A LITHIUM-ION BATTERY AND A BATTERY MANAGING SYSTEM FOR MONITORING A FAST CHARGE**

(71) Applicant: Automotive Cells Company SE, 33520 Bruges (FR)
(72) Inventor: DESPREZ, Philippe, 33200 BORDEAUX (FR)
(74) Representative: Lavoix

(57) **Abstract**

An assembly (14), in particular for a vehicle (10), comprising:
- a lithium-ion battery (18) intended to provide a current (16) when in use, to be idle during a rest time RT, or to be charged by receiving a charging current (22) from a charging system (24) during a charging duration,
- a battery managing system (20) adapted for controlling the charging current at a target value TV, and configured for determining the target value before the charging duration using at least: a first parameter representative of an internal temperature (T) of the battery, a second parameter representative of an electromotive force (U₀) or of a state of charge SOC of the battery, and a third parameter representative of the rest time RT preceding the charging duration.

## Description

The present invention deals with an assembly, in particular for a vehicle, comprising a lithium-ion battery and a battery managing system.

The invention also deals with a vehicle comprising such an assembly, and with a corresponding process of charging the battery.

The term "battery" usually means a plurality of electrochemical cells electrically connected to each other. According to a particular example of battery, the plurality of electrochemical cells is arranged in the form of one or more module(s), each module comprising several electrochemical cells electrically connected to each other and mechanically assembled.

An electrochemical cell usually comprises, in particular, a plurality of positive electrodes intertwined with negative electrodes and separators, known as a "stack" when they are cut in pieces, or as a "jelly roll" when they are continuously wound together. The positive electrodes are connected to each other and to a positive terminal of the cell, and the negative electrodes are connected to each other and to a negative terminal of the cell.

The battery is intended to provide an electrical current when in use, to be idle during a rest time, or to be charged by receiving a current or a power from a charging system during a charging duration.

The negative electrodes for example contain graphite, or a blend of graphite and silicium, which are able to release lithium ions Li+ and electrons during discharge, and to do the opposite during the charging duration.

During operation of the battery, lithium plating, i.e. a deposit of lithium metal at the surface of the negative electrodes, may occur and constitutes a degradation mechanism of the battery, with a negative impact on performances. In order to prevent lithium plating, one known technique consists in designing the negative electrodes such that they overlap the positive ones, and to make sure that no negative electrode is shorter than a neighboring positive electrode.

In order to reduce the charging duration, a specific fast charge protocol is designed for high power charging stations. For monitoring a fast charge, a "map" is often used. The map is a dataset providing a maximum incoming current knowing the internal temperature of the battery and its voltage. As a variant, an algorithm is used, also based on the internal temperature and the state of charge.

However, it has been observed that, despite the above mentioned design of the electrodes, lithium plating tend occur as a result of fast charges of the battery.

An aim of the invention is to solve or improve the above issues, in particular to provide an assembly of a lithium-ion battery and a battery managing system in which lithium plating does not occur or is reduced.

To this end, the invention proposes an assembly, in particular for a vehicle, comprising:
- a lithium-ion battery intended to provide a current when in use, to be idle during a rest time RT, or to be charged by receiving a current or a power from a charging system during a charging duration, the battery having a positive terminal and a negative terminal, and
- a battery managing system adapted for controlling the current or the power during the charging duration at a target value TV, the battery managing system being configured for determining the target value TV before the charging duration using at least:
- a first parameter or set of parameters representative of an internal temperature of the battery,
- a second parameter or set of parameters representative of an electromotive force of the battery between the positive terminal and the negative terminal, or representative of a state of charge SOC of the battery,
wherein the battery managing system is configured for determining the target value TV using a third parameter or set of parameters representative of the rest time RT preceding the charging duration.

In other embodiments, the assembly comprises one or several of the following features, taken in isolation or any technically feasible combination:
- the battery comprises a plurality of positive electrodes electrically connected to the positive terminal, a plurality of negative electrodes electrically connected to the negative terminal and intertwined with the positive electrodes, and layers of electrolyte in order to form at least one stack extending in a stack direction, the negative electrodes having a larger size than the positive electrodes perpendicularly to the stack direction;
- the battery managing system is configured for: determining a reference parameter RP representative of a reference current or of a reference power using the first parameter or set of parameters and the second parameter or set of parameters ; and determining a reduction coefficient C using at least the third parameter or set of parameters, the reduction coefficient C being larger than 0.0 and smaller than or equal to 1.0; the determined target value TV being equal to RP multiplied by C;
- the battery managing system is configured for determining the reduction coefficient C using the second parameter or set of parameters;
- the second parameter or set of parameters is representative of a state of charge SOC, the state of charge SOC being comprised between 0% and 100% of a maximum charge of the battery, the battery managing system being configured so that the reduction coefficient C is: equal to 1.0 if the state of charge SOC is larger than a state of charge threshold SOC₀, or if the rest time RT is shorter than or equal to a rest time threshold RT₀; and otherwise equal to a constant C₀ smaller than 1.0, or equal to a function F of the rest time RT and/or of the state of charge SOC, the function F being smaller than 1.0 at least for some values of RT;
- if the rest time RT is smaller than or equal to a rest time threshold RT1, then F(RT,SOC) = *Max*[0.5; *Min*(1.0; 0.5 + 2 _{*} *SOC*/100)/0.1 _{*} (*RT* - *RT*₀)²], wherein RT, RT₀ and RT₁ are expressed in minutes and SOC is expressed in %; and if the rest time RT is larger than the rest time threshold RT1, then F(RT,SOC) = 1.0;
- the battery managing system is configured so that the reduction coefficient C is equal to the constant C₀ if the state of charge SOC is smaller than the state of charge threshold SOC₀ and if the rest time RT is longer than the rest time threshold RT₀; and
- the constant C₀ is comprised between 0.3 and 0.9.

The invention also proposes a vehicle comprising an assembly as described above.

The invention also proposes a process of charging a battery comprising:
- obtaining an assembly as described above, or a vehicle as described above,
- leaving the battery idle during a rest time RT, and
- determining, by the battery management system, of the target value TV before the charging duration using the first parameter or set of parameters, the second parameter or set of parameters, and the third parameter or set of parameters,
- charging the battery, the battery receiving a current or a power from a charging system during a charging duration, and
- controlling the current or the power during the charging duration at the target value TV using the battery managing system.

The invention and its advantages will be better understood upon reading the following description, given solely by way of example and with reference to the appended drawings, in which:
- Figure 1 is a schematic view of a vehicle comprising an assembly according to the invention,
- Figure 2 is a schematic view of a detail of the battery shown in Figure 1, and
- Figure 3 is a block diagram of a process according to the invention.

### Vehicle

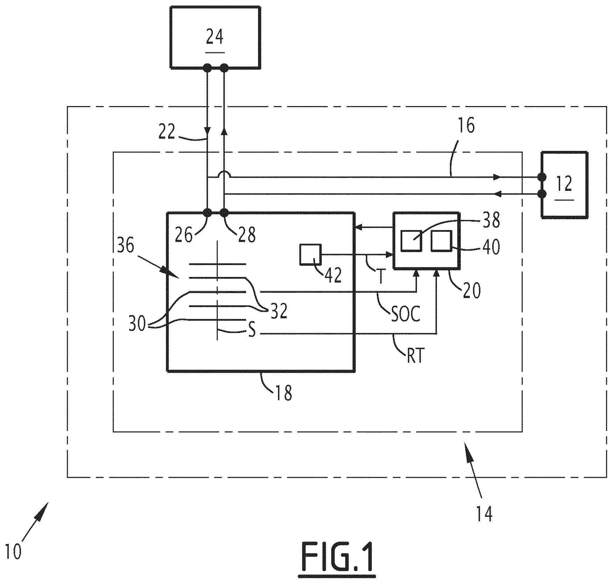

With reference to Figure 1, a vehicle 10 according to the invention will be described.

The vehicle 10 is for example an electric or hybrid car or truck.

The vehicle 10 comprises a motor 12 and an assembly 14 adapted for providing an electrical current 16 to the motor.

The assembly 14 comprises a lithium-ion battery 18, and a battery managing system 20.

The assembly 14 is advantageously adapted to perform a fast charge of the battery 18.

By "fast charge", it is for example meant a charge from 10% to 80% of the maximum charge of the battery 18 within a duration of 25 minutes or less.

### Battery

The battery 18 is intended to provide the current 16 when in use, to be idle during a rest time RT, or to be charged by receiving a charging current 22 or a power from a charging system 24 during a charging duration.

The battery 18 has a positive terminal 26 and a negative terminal 28 adapted for being connected selectively to the charging system 24 and to the motor 12.

The battery 18 comprises a plurality of positive electrodes 30 electrically connected to the positive terminal 26, a plurality of negative electrodes 32 electrically connected to the negative terminal 28 and intertwined with the positive electrodes. The battery 18 also comprises layers of electrolyte 34 extending in between the positive electrodes 30 and the negative electrodes 32.

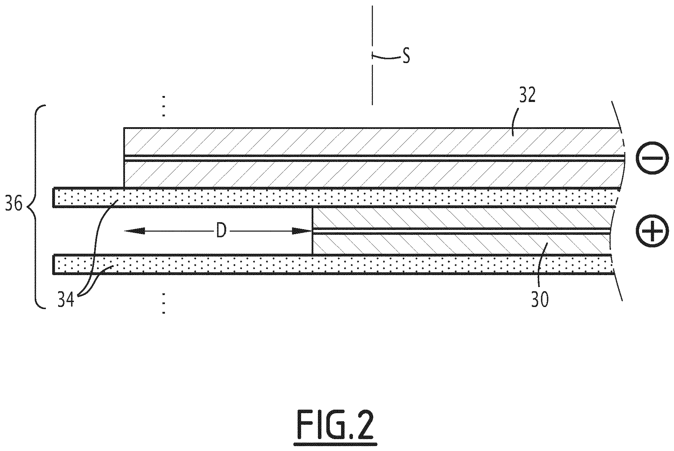

As best seen in Figure 2, the positive electrodes 30, the negative electrodes 32 and the layers of electrolyte 34 for example form at least one stack 36 extending in a stack direction S.

The negative electrodes 32 advantageously have a larger size than the positive electrodes 30 perpendicularly to the stack direction S. Advantageously, the negative electrodes 32 overlap the positive electrodes 30 by distance D, for example comprised between 0.1 and 3 mm.

In practice, the battery 18 may comprise several electromechanical cells (not shown) containing several stacks.

### Battery management system

The battery management system 20 for example comprises a memory 38 and a processor 40. The memory 38 contains instructions which, when they are read by the processor 40, lead the battery management systems 20 to perform the following functions.

The battery managing system 20 is adapted for controlling the current 22 or the power during the charging duration at a target value TV.

The battery managing system 20 is configured for determining the target value TV before the charging duration using:
- a first parameter or set of parameters representative of an internal temperature T of the battery 18,
- a second parameter or set of parameters representative of an electromotive force U₀ of the battery 18 between the positive terminal 26 and the negative terminal 28, or representative of a state of charge SOC of the battery 18, and
- a third parameter or set of parameters representative of the rest time RT preceding the charging duration.

By "parameter representative of X", it is meant a parameter which is advantageously X itself, or which X can be obtained from. By "a set of parameters representative of X", it is meant several parameters which X can be obtained from.

For example, the first parameter is the internal temperature T of the battery 18 provided by a sensor 42.

For example, the second parameter is an electromotive force of the battery Uₒ or the state of charge SOC of the battery 18, advantageously measured by one or several sensors (not shown) in a manner known in itself.

For example, the third parameter is the rest time RT preceding the charging duration. The rest time RT is for example obtained by the battery managing system 20.

These parameters or set of parameters are initial ones, advantageously obtained just before the charging duration.

The battery managing system 20 is for example configured for determining a reference parameter RP representative of a reference current or of a reference power using the first parameter or set of parameters, and the second parameter or set of parameters. The battery managing system 20 is for example configured for determining a reduction coefficient C using at least the third parameter or set of parameters, the reduction coefficient C being larger than 0.0 and smaller than or equal to 1.0, and the determined target value TV being equal to RP multiplied by C.

Advantageously, the battery managing system 20 is configured for determining the reduction coefficient C using the third parameter or set of parameters, and the second parameter or set of parameters.

In a particular embodiment, the second parameter or set of parameters is representative of the state of charge SOC, the state of charge SOC being comprised between 0% and 100% of a maximum charge of the battery 18. The battery managing system 20 is for example configured so that the reduction coefficient C is:
- equal to 1.0 if the state of charge SOC is larger than a state of charge threshold SOC₀, or if the rest time RT is shorter than or equal to a rest time threshold RT₀, and otherwise
- equal to a constant C₀ smaller than 1.0, or equal to a function F of the rest time RT and/or of the state of charge SOC, the function F being smaller than 1.0 at least for some values of RT.

For example, the function F is such that:
- if the rest time RT is smaller than or equal to a rest time threshold RT1 (larger than the rest time threshold RT₀), then F(RT,SOC) = *Max*[0.5; *Min*(1.0; 0.5 + 2 _{*} *SOC*/100)/0.1 _{*} (*RT* - *RT*₀)²], wherein RT, RT₀ and RT₁ are expressed in minutes and SOC is expressed in %, and
- if the rest time RT is larger than the rest time threshold RT1, then F(RT,SOC) = 1.0.

In a particular case, the battery managing system 20 is configured so that the reduction coefficient C is equal to the constant C₀ if the state of charge SOC is smaller than the state of charge threshold SOC₀ and if the rest time RT is longer than the rest time threshold RT₀.

For example, the constant C₀ is comprised between 0.3 and 0.9.

Advantageously, the rest time threshold RT₀ is comprised between 1.0. and 20 min. For example, RT₀ = 5 min.

Advantageously, the rest time threshold RT₁ may be comprised between 20 minutes and 25 days. For example, RT₁ = 30 minutes.

### Process

The operation of the vehicle 10 and the assembly 14 will now be described, which also illustrates a process according to the invention.

When the battery 18 is in use, the battery provides the current 16, for example to the motor 12.

Then the battery 18, with a given state of charge SOC, may be idle for a given rest time RT.

After that, a user (not shown) of the vehicle 10 wishes to perform a fast charge of the battery 18.

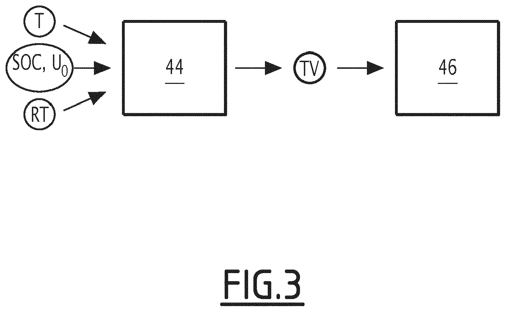

As shown in Figure 3, the process comprises a step 44 of determining the target value TV by the battery management system 20, and a step 46 of charging the battery 18, the battery 18 receiving the charging current 22 or power that is controlled at the target value by the battery managing system 20.

The battery managing system determines the target value TV before the charging duration using the a first parameter or set of parameters, the second parameter or set of parameters, and the third parameter or set of parameters representative of the rest time RT preceding the charging duration.

For example, the battery managing system 20 determines the reference parameter RP using the first parameter or set of parameters, and the second parameter or set of parameters. The reference parameter RP may be read in the memory 38, or obtained as a function of the first parameter or set of parameters, and of the second parameter or set of parameters.

For example, the battery managing system determines the reduction coefficient C using the third parameter or set of parameters, and for example of the second parameter or set of parameters. The reduction coefficient C may be read in the memory 38, or obtained as a function of the parameters.

Then the target value TV is obtained as RP multiplied by C.

The battery 18 is connected to the charging system 24 in order to receive the charging current 22 or power.

The battery managing system 20 controls the current 22 or the power during the charging duration at the target value TV.

The target value TV may be calibrated in advance by varying the initial internal temperature, state of charge, and rest time of the battery, and by conducting tests with increasing target values for the charging current and power, in order to determine a maximum target value for which no lithium plating occurs.

Thanks to the above features, in particular the fact that the battery management system 20 takes the rest time RT of the battery 18 into account in order to determine the target value TV of the current 22 or power received by the battery during a fast charge, lithium plating does not occur or is reduced in the battery.

### List of numeral references

10: vehicle
12: motor
14: assembly
16: current
18: battery
20: battery management system
22: charging current or power
24: charging system
26: positive terminal
28: negative terminal
30: positive electrodes
32: negative electrodes
34: layers of electrolyte
36: stack
38: memory
40: processor
42: sensor
44: calculation step
46: charging step

## Claims

1. An assembly (14), in particular for a vehicle (10), comprising:
- a lithium-ion battery (18) intended to provide a current (16) when in use, to be idle during a rest time RT, or to be charged by receiving a current (22) or a power from a charging system (24) during a charging duration, the battery (18) having a positive terminal (26) and a negative terminal (28), and
- a battery managing system (20) adapted for controlling the current (22) or the power during the charging duration at a target value TV, the battery managing system (20) being configured for determining the target value TV before the charging duration using at least:
- a first parameter or set of parameters representative of an internal temperature (T) of the battery (18),
- a second parameter or set of parameters representative of an electromotive force (U₀) of the battery (18) between the positive terminal (26) and the negative terminal (28), or representative of a state of charge SOC of the battery (18),
**characterized in that** the battery managing system (20) is configured for determining the target value TV using a third parameter or set of parameters representative of the rest time RT preceding the charging duration.

2. The assembly (14) according to claim 1, wherein the battery (18) comprises a plurality of positive electrodes (30) electrically connected to the positive terminal (26), a plurality of negative electrodes (32) electrically connected to the negative terminal and intertwined with the positive electrodes, and layers of electrolyte (34) in order to form at least one stack (36) extending in a stack direction (S), the negative electrodes (32) having a larger size than the positive electrodes (30) perpendicularly to the stack direction (S).

3. The assembly (14) according to claim 1 or 2, wherein the battery managing system (20) is configured for:
- determining a reference parameter RP representative of a reference current or of a reference power using the first parameter or set of parameters and the second parameter or set of parameters, and
- determining a reduction coefficient C using at least the third parameter or set of parameters, the reduction coefficient C being larger than 0.0 and smaller than or equal to 1.0.
the determined target value TV being equal to RP multiplied by C.

4. The assembly (14) according to claim 3, wherein the battery managing system (20) is configured for determining the reduction coefficient C using the second parameter or set of parameters.

5. The assembly (14) according to claim 4, wherein the second parameter or set of parameters is representative of a state of charge SOC, the state of charge SOC being comprised between 0% and 100% of a maximum charge of the battery (18), the battery managing system (20) being configured so that the reduction coefficient C is:
- equal to 1.0 if the state of charge SOC is larger than a state of charge threshold SOC₀, or if the rest time RT is shorter than or equal to a rest time threshold RT₀, and otherwise
- equal to a constant C₀ smaller than 1.0, or equal to a function F of the rest time RT and/or of the state of charge SOC, the function F being smaller than 1.0 at least for some values of RT.

6. The assembly (14) according to claim 5, wherein:
- if the rest time RT is smaller than or equal to a rest time threshold RT1, then F(RT,SOC) = *Max*[0.5; *Min*(1.0; 0.5 + 2 * *SOC*/100)/0.1 _{*} (*RT* - *RT*₀)²], wherein RT, RT₀ and RT₁ are expressed in minutes and SOC is expressed in %, and
- if the rest time RT is larger than the rest time threshold RT1, then F(RT,SOC) = 1.0.

7. The assembly (14) according to claim 5 or 6, wherein the battery managing system (20) is configured so that the reduction coefficient C is equal to the constant C₀ if the state of charge SOC is smaller than the state of charge threshold SOC₀ and if the rest time RT is longer than the rest time threshold RT₀.

8. The assembly (14) according to any one of claims 5 to 7, wherein the constant C₀ is comprised between 0.3 and 0.9.

9. A vehicle comprising an assembly (14) as described by any one of claims 1 to 8.

10. A process comprising:
- obtaining an assembly (14) as described by any one of claims 1 to 8, or a vehicle as described by claim 9,
- leaving the battery (18) idle during a rest time RT, and
- determining, by the battery management system (20), of the target value TV before the charging duration using the first parameter or set of parameters, the second parameter or set of parameters, and the third parameter or set of parameters,
- charging the battery (18), the battery (18) receiving a current (22) or a power from a charging system (24) during a charging duration, and
- controlling the current (22) or the power during the charging duration at the target value TV using the battery managing system (20).
